# EUROPEAN PATENT SPECIFICATION

(11) **EP 1 404 497 B1**
(45) Date of publication and mention of the grant of the patent: **10.01.2007**
(21) Application number: 02743300.2
(22) Date of filing: 19.06.2002
(51) Int. Cl.: B27K 3/36

(54) **PRESERVATION OF WOOD WITH POTASSIUM FORMATE OR CALCIUM FORMATE**
KONSERVIERUNG VON HOLZ MIT KALIUMFORMIAT ODER CALCIUMFORMIAT
CONSERVATION DU BOIS AVEC DU FORMIATE DE POTASSIUM OU DU FORMIATE DE CALCIUM

(30) Priority: 19.06.2001 FI 20011298
(43) Date of publication of application: 07.04.2004
(73) Proprietor: Kemira Oyj, 00180 Helsinki (FI)
(72) Inventor: AITTA, Eero, FIN-91410 Jokirinne (FI); SEPPI, Pekka, FIN-90520 Oulu (FI)
(74) Representative: Svensson, Johan Henrik
(86) International application number: PCT/FI2002/000540
(87) International publication number: WO 2003/002318

(56) References cited:
- WO-A1-95/20319
- GB-A- 2 046 748
- DATABASE CAPLUS [Online] DOC. NO. 27:5601 CHWALBE CARL G. ET AL.: 'New cheap fire-protecting material for wood', XP002958409 Retrieved from STN Database accession no. 1933:5601 & CHEM.-ZTG. vol. 56, 1932, pages 909 - 911
- DATABASE CAPLUS [Online] DOC. NO. 97:199783 FILAK M. ET AL.: 'Water-soluble flameproofing impregnating agent for wood', XP002958410 Retrieved from STN Database accession no. 1982:599783 & CS 195 528 B 29 February 1980
- DATABASE CAPLUS [Online] DOC. NO. 110:9962 'Acetylation of wood materials', XP002958411 Retrieved from STN Database accession no. 1989:9962 & JP 63 199 604 A 18 August 1988
- DATABASE WPI Week 198723, Derwent Publications Ltd., London, GB; Class C01, AN 1987-160091, XP002958412 & JP 62 094 301 A (KYOEI SEICHA KK) 30 April 1987

## Description

The invention relates to the use of a particular wood treatment solution for improving the preservation of wood. The invention specifically relates to improving rot resistance of wood.

The most important biologic causes of wood deterioration are rot fungi and insects, such as termites. The preservation of wood is conventionally improved by heat treatment or pressure impregnation. In heat treatment, wood is kept at an elevated temperature (above 200°C), which dries the wood and at the same time changes its structure. Heat treatment somewhat improves the rot resistance of wood. Excessive heat treatment weakens the mechanical properties of wood. By the heat treatment method the anti-rot results achieved are not as good as those achieved by the pressure impregnation method. In the pressure impregnation method, protection against rot is based on the impregnation of wood by means of pressure with a solution that contains, for example, a salt of copper, zinc, chromium or arsenic, or a mixture thereof, the salts preventing microbiologic activity in wood. The salts may be, for example, carboxylates, such as acetates or formates.

From patent publication WO 9527600 there is known a wood preservation agent which contains as its principal component copper acetate and possibly zinc acetate, as well as a nitrite, such as sodium nitrite, which is stated to reduce the leaching of copper and zinc ions from treated wood. In addition, this wood protection agent contains a stabilization chemical, which is an ammonium salt of a weak organic acid or a mixture of such an ammonium salt and an alkali metal salt of a weak organic acid. According to the publication, preferable stabilization agents include ammonium acetate and a mixture of ammonium acetate and sodium acetate. In this publication, also, wood protection is based on "less detrimental" metals, i.e. zinc and copper, which replace chromium and arsenic.

The use of a pressure impregnation method based on the use of heavy metals, such as Cu, Zn, Cr and As, is problematic, as is known, since such pressure-treated wood must not be burned owing to, for example, the metals present in it. Thus, pressure-treated wood is a problem waste that cannot be recycled. Heat-treated wood naturally does not present this problem, but results as good as with the pressure impregnation method (in terms of wood preservation) cannot be achieved by heat treatment.

Thus there exists a clear need for a wood treatment solution which would be as effective as the present solutions used in the pressure impregnation method but in which there would not be used chemicals rendering the wood a problem waste. It is therefore an object of the present invention to provide an environment-friendly wood treatment solution and process.

Actually, the invention concerns the use of potassium formate or calcium formate in the form of a wood treatment solution which does not contain heavy metals as an impregnation agent to protect wood against deterioration caused by fungi and/or insects.

According to the invention there is thus provided a wood treatment solution which does not contain heavy metals and which contains an impregnation agent that is potassium formate or calcium formate.

According to the invention there is also provided a process for the treatment of wood in order to improve its preservation, in which process wood is treated with a wood treatment solution which does not contain heavy metals and which contains an impregnation agent that is potassium formate or calcium formate.

Furthermore, according to the invention there is obtained impregnated wood which contains as an impregnation agent, in an amount of 1 - 20 % by weight, potassium formate or calcium formate.

According to the invention it is also possible to use mixtures of said salts.

The said wood treatment solution contains preferably 2 - 40 % by weight, more preferably 4 - 20 % by weight, of potassium formate or calcium formate.

According to the invention the wood to be treated may be untreated wood, but preferably it is heat-treated wood. The heat treatment can suitably be carried out at a temperature of approx. 180 - 200 °C.

The wood treatment process according to the invention can be carried out by using a procedure known *per se,* for example by immersing the wood to be treated in the wood treatment solution according to the invention. The treatment can be carried out under pressure, which improves the absorption of the solution into the wood.

According to the invention, potassium formate or calcium formate can be used as a wood impregnation agent for protecting wood against deterioration caused by fungi and/or insects, in particular against rot and/or termites.

By the expression "which does not contain heavy metals" is meant in this context that heavy metals are not intentionally added to the wood treatment solution. It is, however, to be understood that the solution may contain very small amounts of heavy metals derived from the water used for forming the solution. Likewise, the wood treated according to the invention may contain very small amounts of heavy metals that are naturally present in wood and/or are derived from the aqueous phase of the wood treatment solution.

The invention is based on the fact that formate, which is a chemical compound developed by ants, is a poor substrate for the growth of microorganisms. Formate has a growth-preventing effect or even an effect of killing microbiologic organisms. In general it is thought that the effect of formic acid is based on acidity, i.e. the "acid effect". It seems, however, that specifically the formate tail is of great importance, since it has been shown that, for example, in animal feed preservation, specifically formate salts seem effectively to inhibit bacterial activity.

The invention is described below in greater detail with the help of examples, examining anti-rot treatment of on the one hand ordinary and on the other hand heat-treated pine and spruce with the wood treatment solution according to the invention. By heat treatment is meant a conventional procedure wherein wood is kept at an elevated temperature, whereby moisture is removed from the wood and the structure of the wood is changed.

### Examples

### Preliminary tests

A board specimen was kept for several days in a strong potassium formate solution. After impregnation, the board was in summer buried in a garden plot together with untreated board taken from the same board specimen. The following summer the boards were dug up, whereupon it was observed that the treated board had remained without any decay. Instead, on the untreated board, decay had started, it smelled of mold and was water-soaked and blackened.

Next, a test was performed in which a piece of wood was impregnated with potassium formate. This and an untreated wood specimen were placed in a closed and humid space containing rot fungi. After the test period, it was observed that there had not occurred decay in either sample. This was due to the fact that the potassium formate had dissolved in water and had at the same time inhibited all decay activity in the experimental space. It was decides that in the following phase Ca formate poorly soluble in water would be tested.

### Impregnation of blocks of wood with a Ca formate solution

The tests were carried out by using test specimens made from spruce or pine wood. The size of specimens made of pine was approx. 20 x 15 x 2.4 cm³ and respectively the size of the specimens made from spruce was approx. 20 x 12 x 7.2 cm³. One half of the wood specimens were subjected to a heat treatment at 190 °C. This heat treatment did not notably affect the rot resistance of the wood but it improved the absorption of the solution, since heat-treated wood is more porous than untreated wood. One half of the specimens were subjected to no heat treatment. The wood specimens were measured and weighed before the chemical treatment. Neither chemical nor heat treatment was carried out on the reference specimens that were used in the accelerated rotting tests described below.

The chemical treatment was carried out by immersion of the wood specimens in a closed vessel containing Ca formate solution (concentrations 120 g/kg, 80 g/kg and 40 g/kg). The temperature of the solution was 40 - 50 °C. In the vessel there prevailed a pressure of approx. 150 kPa (1.5 bar), by means of which the solution was "forced" into the wood. The treatment time was 2 h. After the chemical treatment the wood specimens were dried in an incubator overnight at 80 - 90 °C.

The results of the impregnation test are shown in Table 1.

**Table 1**

| Absorption of Ca formate solution into pine and spruce. The absorption is indicated in units of mg of Ca formate / cm³ of wood. | | | | |
|---|---|---|---|---|
| Solution g/kg | Pine | | Spruce | |
| | Ordinary | Heat-treated | Ordinary | Heat-treated |
| Ca formate 120 | 25 | 60 | 7 | 32 |
| Ca formate 80 | 3 | 38 | 5 | 17 |
| Ca formate 40 | - *) | 26 | -*) | 17 |

| | | | | |
|---|---|---|---|---|
| *) after the drying step the sample was lighter than before treatment with the solution | | | | |

It can be seen from the results of the impregnation tests that formate solution is absorbed considerably better into heat-treated wood, which is more porous than ordinary wood. Furthermore, the solution is better absorbed into pine. The density of heat-treated wood is approx. 400 mg/cm³. Thus the amount of Ca formate in heat-treated wood is approx. 7 - 15 % for pine and 4 - 8 % for spruce.

### Accelerated rotting tests

In the next phase the specimens treated above were sent to a rot fungus test. European standard EN 113 was applied in carrying out the test. The wood was exposed to conditions as rigorous as possible with respect to decay: temperature was approx. 30 °C and humidity 100 %, and bad rot fungi such as *Poria placenta, Gloeophyllum trabeum* and *Coniophora puteana* had been introduced into the testing space (culture flask). These fungi are present in all rotting objects. The test lasted for 4 months. A reference specimen that had not been heat-treated was included in each test. The rotting of such wood should in an accelerated rotting test be such that the weight loss is at least 20 % with each fungus species. The specimens were weighed before the beginning of the test.

The results of the accelerated rotting tests for spruce are shown in Tables 2 - 4 and for pine in Tables 5 - 7. In the examination of the results it is advisable to use as a reference value the known information according to which a weight loss of 20 - 30 % is reached with heat-treated spruce and pine in these test conditions.

**Table 2**

| Decay of spruce specimens when the rot fungus was *Gloeophyllum trabeum.* The heat-treated wood was treated with Ca formate having a concentration of 80 g/kg. | | |
|---|---|---|
| Repeat test | Weight loss %, treated wood | Weight loss %, untreated reference specimen |
| 1 | 3.73 | 44.21 |
| 2 | 4.45 | 38.70 |
| 3 | 6.55 | 35.51 |
| 4 | 3.71 | 42.18 |
| Mean | **4.61** | **40.15** |

**Table 3**

| Decay of spruce specimens when the rot fungus was *Coniophora puteana.* The heat-treated wood was treated with Ca formate having a concentration of 80 g/kg. | | |
|---|---|---|
| Repeat test | Weight loss %, treated wood | Weight loss %, untreated reference specimen |
| 1 | 0.11 | 58.34 |
| 2 | 0.10 | 55.35 |
| 3 | 0.23 | 50.22 |
| 4 | 0.89 | 52.34 |
| Mean | **0.33** | **54.06** |

**Table 4**

| Decay of spruce specimens when the rot fungus was *Poria placenta.* The heat-treated wood was treated with Ca formate having a concentration of 80 g/kg. | | |
|---|---|---|
| Repeat test | Weight loss %, treated wood | Weight loss %, untreated reference specimen |
| 1 | 15.62 | 36.21 |
| 2 | 13.94 | 26.31 |
| 3 | 0.14 | 37.58 |
| 4 | 14.71 | 28.20 |
| Mean | **11.10** | **32.07** |

**Table 5**

| Decay of pine specimens when the rot fungus was *Gloeophyllum trabeum.* The heat-treated wood was treated with Ca formate having a concentration of 80 g/kg. | | |
|---|---|---|
| Repeat test | Weight loss %, treated wood | Weight loss %, untreated reference specimen |
| 1 | 1.12 | 14.81 |
| 2 | 0.13 | 34.46 |
| 3 | 0.38 | 46.89 |
| 4 | 0.75 | 33.67 |
| Mean | **0.59** | **32.46** |

**Table 6**

| Decay of pine specimens when the rot fungus was *Coniophora puteana.* The heat-treated wood was treated with Ca formate having a concentration of 80 g/kg. | | |
|---|---|---|
| Repeat test | Weight loss %, treated wood | Weight loss %, untreated reference specimen |
| 1 | 0.84 | 44.10 |
| 2 | 0.17 | 47.43 |
| 3 | 0.01 | 46.93 |
| 4 | 0.27 | 38.47 |
| Mean | **0.32** | **44.23** |

**Table 7**

| Decay of pine specimens when the rot fungus was *Poria placenta.* The heat-treated wood was treated with Ca formate having a concentration of 80 g/kg. | | |
|---|---|---|
| Repeat test | Weight loss %, treated wood | Weight loss %, untreated reference specimen |
| 1 | 13.72 | 23.87 |
| 2 | 6.95 | 24.37 |
| 3 | 6.23 | 30.83 |
| 4 | 8.79 | 24.46 |
| Mean | **8.93** | **25.88** |

The results show that decay was rapid in the reference specimens. After four months, up to one-half of the untreated wood had rotted, i.e. burned (e.g. Table 3). For pine, the means ranged from 26 to 44 %; for spruce from 32 to 54 %. For specimens treated according to the invention the respective ranges were 0.3 - 9 % for pine and 0.3 - 11 % for spruce. *Poria placenta* was the worst cause of rot.

Table 8 shows the results by using the classification according to standard EN 350-1994. The standard uses rot resistance classification 1 - 5, of which class 1 = well resistant to rot, class 2 = rot resistant, class 3 = moderately rot resistant, class 4 = poorly resistant, and class 5 = not resistant.

**Table 8**

| Rot resistance of wood treated according to the invention with respect to three different rot fungi | | |
|---|---|---|
| Fungus | Treated spruce | Treated pine |
| *Poria placenta* | Class 3 | Class 3 |
| *Coniophora puteana* | Class 1 | Class 1 |
| *Gloeophyllum trabeum* | Class 1 | Class 1 |

On the basis of these rotting tests it can be noted that rot resistance increased considerably as compared with untreated wood. A considerable improvement is produced by heat treatment. If a treatment with Ca formate according to the invention is carried out in addition to heat treatment, rotting can be prevented almost completely.

For both spruce and pine, the worst agent causing decay was *Poria placenta.* As to the other fungi, heat treatment caused a considerable decrease in decay, but the chemical treatment in practice stopped the decay. Overall, the results are good.

The solution according to the invention does not contain any toxic components. The wood is completely recyclable and can be burned freely. The amount of wood treatment agent is approx. 10 % of the amount of wood, and thus the invention is also economical.

In addition to anti-rot treatment, the process can also be used for preventing destruction caused by termites. Termites destroy a considerable amount of timber in southern hot conditions. By treating heat-treated timber with the solution according to the invention, effective protection is thus obtained against termites.

## Claims

1. Use of potassium formate or calcium formate in the form of a wood treatment solution which does not contain heavy metals as an impregnation agent to protect wood against deterioration caused by fungi and/or insects.

2. The use according to Claim 1, **characterized in that** the said potassium formate or calcium formate is used for protecting wood against rot and/or termites.

3. The use according to Claim 1, **characterized in that** potassium formate is used as the impregnation agent.

4. The use according to Claim 1, **characterized in that** calcium formate is used as the impregnation agent.

5. The use according to Claim 1, **characterized in that** the wood treatment solution contains potassium formate or calcium formate in an amount of 2-40 % by weight, preferably 4-20 % by weight.

6. The use according to Claim 1, **characterized in that** the wood is pine or spruce.

7. The use according to Claim 1, **characterized in that** the wood is heat-treated.

## Patentansprüche

1. Verwendung von Kaliumformiat oder Calciumformiat, in Form einer schwermetallfreien Lösung zur Behandlung von Holz, als Imprägnierungsmittel zum Schutz von Holz gegen durch Pilze und/oder Insekten verursachten Verfall.

2. Verwendung nach Anspruch 1, **dadurch gekennzeichnet, dass** das Kaliumformiat oder Calciumformiat zum Schutz von Holz gegen Fäule und/oder Termiten verwendet wird.

3. Verwendung nach Anspruch 1, **dadurch gekennzeichnet, dass** als Imprägnierungsmittel Kaliumformiat verwendet wird.

4. Verwendung nach Anspruch 1, **dadurch gekennzeichnet, dass** als Imprägnierungsmittel Calciumformiat verwendet wird.

5. Verwendung nach Anspruch 1, **dadurch gekennzeichnet, dass** die Lösung zur Behandlung von Holz Kaliumformiat oder Calciumformiat in einer Menge von 2-40 Gew.-%, vorzugsweise 4-20 Gew.-%, enthält.

6. Verwendung nach Anspruch 1, **dadurch gekennzeichnet, dass** es sich bei dem Holz um Kiefer oder Fichte handelt.

7. Verwendung nach Anspruch 1, **dadurch gekennzeichnet, dass** das Holz wärmebehandelt ist.

## Revendications

1. Utilisation de formiate de potassium ou de formiate de calcium sous la forme d'une solution de traitement du bois ne contenant pas de métaux lourds en tant qu'agent d'imprégnation pour protéger le bois contre les dégradations dues aux champignons et/ou aux insectes.

2. Utilisation selon la revendication 1, **caractérisée en ce que** ledit formiate de potassium ou ledit formiate de calcium est utilisé pour la protection du bois contre la pourriture et/ou les termites.

3. Utilisation selon la revendication 1, **caractérisée en ce que** ledit formiate de potassium est utilisé en tant qu'agent d'imprégnation.

4. Utilisation selon la revendication 1, **caractérisée en ce que** ledit formiate de calcium est utilisé en tant qu'agent d'imprégnation.

5. Utilisation selon la revendication 1, **caractérisée en ce que** la solution de traitement du bois contient du formiate de potassium ou du formiate de calcium en une teneur de 2 à 40 % en poids, et de préférence de 4 à 20 % en poids.

6. Utilisation selon la revendication 1, **caractérisée en ce que** le bois est du pin ou de l'épicéa.

7. Utilisation selon la revendication 1, **caractérisée en ce que** le bois est traité par la chaleur.
